Europäisches Patentamt

European Patent Office

Office européen des brevets

(19)

(11) Publication number: **0 241 152**
**A2**

(12) **EUROPEAN PATENT APPLICATION**

(21) Application number: **87302135.6**

(22) Date of filing: **12.03.87**

(51) Int. Cl.⁴: **H04L 11/20**

(30) Priority: **10.04.86 GB 8608698**

(43) Date of publication of application:
**14.10.87 Bulletin 87/42**

(84) Designated Contracting States:
**BE CH DE FR IT LI NL**

(71) Applicant: **STC PLC**
**10, Maltravers Street**
**London, WC2R 3HA(GB)**

(72) Inventor: **Carter,CliveRonald**
**41, Basbow Lane**
**Bishop's StortfordöHertfordshire(GB)**
Inventor: **Phillips, David**
**18 Calverley Close**
**Bishop's StortfordöHertfordshire(GB)**

(74) Representative: **Capsey, Sydney Ross**
**STC Patents West Road**
**Harlow Essex CM20 2SH(GB)**

(54) **Automatic telecommunication switching system.**

(57) An automatic telecommunication switching sys-
tem handles all communications, whether voice or
data, in packet switching manner. The switching
network consists of a multi-stage network of co-
ordinate matrix elements each of which has memory
and processing means. Such an element is a single-
chip VLSI device.

Each packet has a header which includes the
address of the network outlet to which that packet is
to be routed, each such address consisting of a digit
for each stage via which the packet is to be routed.
At each matrix element the appropriate digit of that
address is used to route the packet to the appro-
priate outlet from the matrix element.

Fig.1.

# AUTOMATIC TELECOMMUNICATION SWITCHING SYSTEM

## Technical Field

The present invention relates to an automatic telecommunication switching system in which intelligence including voice, is handled in packet manner.

## Background of the Invention

The emergence of new services with a wide range of quality of service requirements presents problems for current networks; existing PCM switches cannot handle channels with bandwidths greater than 64kbit/s without major modification, and they handle sub-rate channels inefficiently. For an integrated switching system to handle a wide variety of data, voice and visual telecommunication services it needs a variable bit rate capability.

The packet mode of operation provides the necessary flexibility, with dynamically variable bit rate capability both at call establishment and during a call, but the current generation of packet switches provides a bandwidth which is only sufficient to cater for data which has a low throughput requirement and can tolerate delay. The throughput of existing packet switch architectures is limited by the bandwidth of shared resources such as a common bus, common buffer memory and network layer processing.

## Summary of the Invention

An object of the invention is to minimise or overcome the effects of the limitations discussed above.

According to the invention there is provided an automatic telecommunication switching system, in which intelligence is handled in packet manner, in which the system includes a plural-stage switching network each stage of which includes co-ordinate matrices each of which interconnects a plurality of inlets and outlets, in which each said matrix has its own memory and processing means, so that control of the system is at least partly distributed, in which each intelligence packet on arriving at a said matrix is routed into that matrix's memory means and its address information examined by the matrix's processing means to ascertain how the packet is to be routed, and in which in response to said examination the processing means at a matrix routes a said packet to an outlet of that matrix appropriate to the packets' address information, so that a packet is progressed through the switching network in a stage-by-stage manner under the control of the processing means of the appropriate matrices.

## Brief Description of the Drawings

Embodiments of the invention will now be described with reference to the accompanying drawintgs, in which

Fig. 1 is an overall "architecture" block diagram of an automatic telecommunication switching system to which the invention is applicable.

Fig. 2 is an example of a three-stage switching network usable as the packet switching network of the system of Fig. 1.

Fig. 3 shows the network of Fig. 2, represented in an alternative and simplified manner.

Fig. 4 is an example of a five stage matrix following the principles of the matrix of Fig. 2, which is also usable in the system of Fig. 1.

## Description of Preferred Embodiments

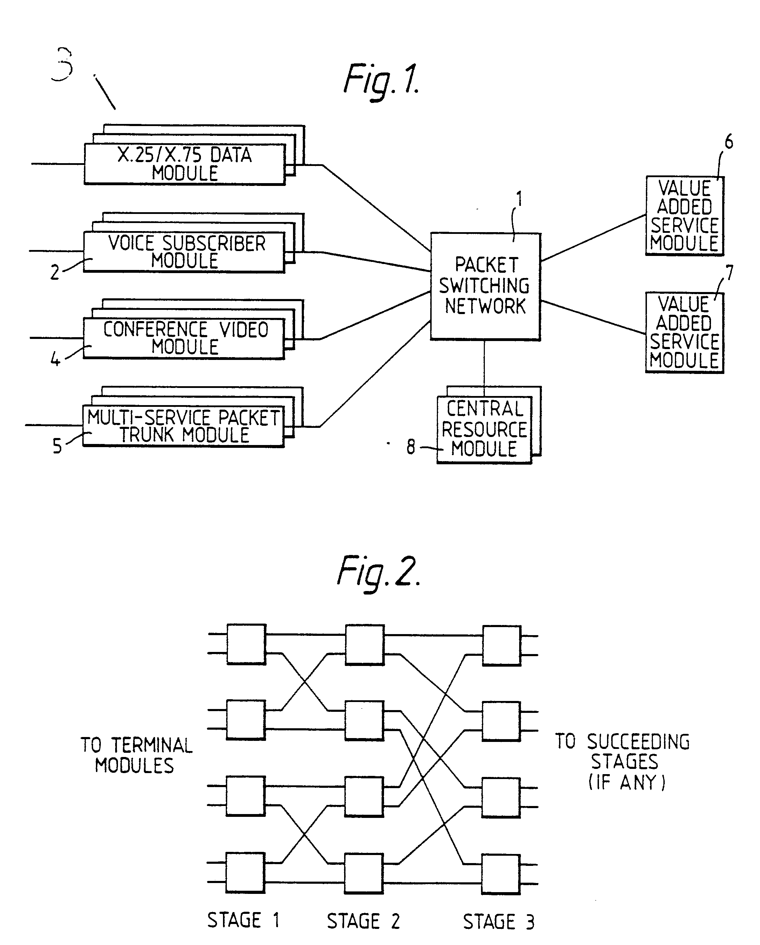

The basic architecture of a multi-service packet switch is simple and regular, consisting of a packet switching network 1 connected to a variety of terminal modules, Fig. 1. The terminal modules include port interface modules for interfacing to external communications links, subscriber lines or trunks, a voice subscriber's line module 2 being shown as an example. There are also exchange resource modules. Value added service modules may also be connected to provide such services as protocol conversion or message handling. Thus in Fig. 1 we see a voice subscriber module 2, an X25/X75 data module 3, a conference video module 4, a multiservice packet trunk module and value-added modules 6,7. The numbers and types of modules will in practice vary from exchange to exchange.

The switching network consists of a regular array of identical packet switching elements organised as a folded network matrix. That is, all terminals to be interconnected are connected to one side of the matrix, and a connection is set up by going into the matrix and then back out of it. The packet switching elements have the processing power and memory needed to execute the algorithms to route packets between the terminal modules. The number of switching stages required depends on the number of terminals, but because of the folded network arrangement the switch size can be increased by adding additional switching stages without requiring any rearrangement of the existing network or terminal connections. Only a single functional unit, the packet switching element, is required to build up the entire switching network. This element is in effect an electronic analogue of a cross-bar switch, with some of its own processing. The well-known ITT System 1240 is one example of a system in which a multistage matrix array is used in this way.

Terminal modules are connected to the packet switching network via a standard serial interface, so that new terminal types can be added without affecting the packet switching network.

A packet "datagram" store and forward switching technique is used whereby each datagram packet carries a routing address in its header, and by reference to this address the switching elements can forward the datagrams over the appropriate path.

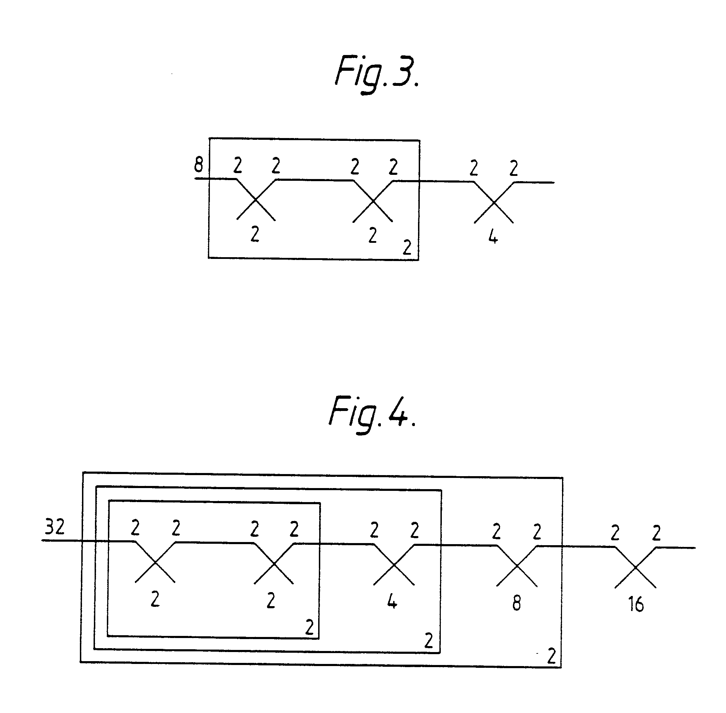

The packet switching network overcomes many of the drawbacks of existing packet switches which rely on shared buses for packet transfer, and central processors for call control; the range of application of such systems and their ability to grow is seriously limited. In contrast the packet switching network used in the present system consists of an array of identical switching elements connected together in a matrix. Thus the traffic is distributed across the matrix and as the exchange grows the matrix also grows maintaining a constant traffic level on the links. An example of a three stage matrix of switching elements with four connections each is shown in Fig. 2, and Fig. 3 shows 3-stage and 5-stage matrix examples in an alternative shorthand representation. Note that in these networks each switching element is a 2 x 2 coordinate switch. The use of a folded single-sided structure allows continuous expansion by the addition of further switching stages as the number of terminals increases without the need to change connections, or to predetermine the maximum size of a switch.

The packet switching element is a single VLSI circuit incorporating $n$ identical full duplex links plus internal memory and logic for packet buffering and routing. The optimum value for the number of links (n) lies between 4 (the minimum practical) and 16. The speed of the links must be of the order of tens of megabits per second to give the wide bandwidth and the short delays required to support a range of services.

Each link carries an incoming and an outgoing serial bit stream, and these bit streams operate asynchronously, eliminating the need for synchronous timing signals and their distribution throughout the switch network. Packets received on the incoming links are autonomously written into buffer space in RAM (Random Access Memory) by DMA (Direct Memory Access). Then an algorithm is executed by the internal processing logic of the switching element to route the received packet to one of the outgoing links according to a routing code in a header field of the packet. Packets are transmitted on the outgoing links from buffer RAM by DMA.

The memory arrangements used can follow established practice, and commercially available microprocessors are used for the processing mentioned, using one such microprocessor per switch element. In this context the term switch element means one of the individual matrices of the array.

The maximum packet size must be set large enough to keep the processing overheads small in proportion to the transmission time, but small enough such that the buffer space required does not exceed the available memory size. Packet size may differ in different systems, but one size usable is 128 bytes.

Commercially available components for use in a laboratory demonstration model provide 4 links at 10 or 20 Mbit/s, 4 kilobytes of RAM and have a machine cycle time of 50 nanoseconds. Such a size is adequate for a laboratory model provided that the routing algorithms are simple to minimise processing overheads and that a reasonable compromise packet size can be established. If these parameters are unsuitable for a product, custom VLSI can be developed.

Port interface modules support the external ports of the switch and provide the service required for particular types of traffic. These modules are each connected to the network via a standard asynchronous serial interface. A variety of port interface module types are required to support various port interfaces. Some examples of the types of port interfaces which may be supported are:

    (a) X.25 packet data subscriber port
    (b) Voice subscriber port
    (c) 2Mbit/s conference video circuit port
    (d) Multi-service packet data trunk port.

Each module incorporates dedicated interface circuits to support the appropriate external ports and a processor plus memory to provide packet buffering, external protocol handling, call processing, and transfer of data and signalling across the switch network. Sufficient processor power is provided in the modules to support all call processing functions.

The port interface modules are not described herein in detail since they, in general, follow established practice, but their functions include:

    (i) send and receive data (including voice where appropriate) and signalling over the external ports

(ii) assemble/disassemble data packets if the external information stream is not packetised

(iii) fragment packets which are too large for transfer across the switching network

(iv) call establishment in co-operation with the module handling the other call half and centralised resources

(v) send and receive data and signalling over the internal switch network providing reliable transfer by the use of error detection or correction code and retransmission where required.

Note that since we are using a folded network, each call is set up in two halves, one into the network, and one out of it.

Some of the requirements to support particular services are as follows:

(a) X.25/X.75 packet data service requires reliable sequenced data transfer, which requires the detection of lost or corrupted packets and their retransmission. Also packet sizes of up to 4 kilobytes may be requested at call establishment, and this requires packet fragmentation before transfer across the switch network.

(b) Voice service is tolerant of loss, but sensitive to delays, so it is usual to accept packet loss without retransmission and to keep voice packets short to minimise packet assembly delays. Apart from the widely used 64 kbit/s PCM, a number of other voice coding schemes are proposed for public networks providing lower bit rates or higher quality. Voice processing may also be required for silence suppression or echo cancellation.

(c) A trunk port interface module should support one trunk circuit operating at an appropriate speed of the national hierarchy, e.g. 2 Mbit/s or 8 Mbit/s. Because the terminal modules operate through a standard interface, new terminal types can be added without affecting the existing packet switching network.

The peripheral modules at which subscriber lines and trunks are terminated, incorporate microprocessors which provide packet buffering, external protocol handling, transfer of data and signalling across the switch network, and many of the call-processing functions. Such an arrangement is not only more efficient than a fully centralised system, but allows the processing capacity to increase in proportion to the number of terminations supported.

Not all switching functions, however, are best provided by a distributed architecture. Certain functions such as system maintenance, control of external links to remote operations and maintenance centres, bulk data storage and subscriber and routing information are best provided by centralised resources, as seen from the inclusion in Fig. 1 of a central resource module 8. When the service of a facility provided by such a module 8 is needed, a connection is set up thereto in the normal call-setting manner, this connection being maintained as long as required.

The processors communicate with each other by transferring message packets across the same switch network as the data (intelligence) packets. The call processing functions of the central resource processors 7 consist mainly of responding to requests from the peripheral module processors for address or routing translations, and determination of terminating line or trunk equipment number, and selection of a trunk in a trunk group where appropriate. Given the destination equipment number the derivation of a routing address to route packets from source to destination peripheral modules is simple and the peripheral modules can then exchange messages to effect call establishment. Where however, the switch is being used in a leased line or other slave application the central resource processor may itself initiate path establishment.

The internal protocol used in the system is the protocol used to exchange data and signalling messages between terminal modules (port interface modules and resource modules) across the network. The packet format includes a header which has two fixed length fields, a routing address field and a packet length field. The following fields, namely the information field and the error check code, are forwarded transparently by the switching elements. That is, they are not altered in any way by those elements.

The routing address consists of a number of routing 'digits', where one 'digit' determines the routing through one switching element. If the switching elements are 2 x 2 switches, each such digit can have one bit, 1 or 0 dependent on which outlet is needed. In the case of a 16 x 16 switching element, each such digit has four bits. The number of routing digits required to select a path through the matrix depends on the number of stages to be traversed and is thus variable, but the routing digits are padded out to maintain a fixed length field to minimise processing overheads. The routing address required to select a path between a pair of modules is determined by the source module at virtual call establishment and this address is used on all packets for the duration of the call, thus ensuring that all packets of a call follow the same path and therefore are delivered in sequence.

The length field contains a binary count of the length of the information field in bytes, and an error check code protects against errors in link transmission or in the switching elements. As the links are short and situated within the "benign" environment of an exchange transmission errors should be negligible under normal conditions. The error check code is still required however, to detect errors under hardware failure conditions. Link error detection has no advantage with the low error rate expected, so error detection is performed end-to-end across the network.

A network such as that of Fig. 2, is in effect a "multi-rooted tree" in which each switching element has the same number of connections to "parents" as "children". If all packets travelled all the way up to a root element there would be no concentration of packets onto upper links. However, since packets need only travel up as far as a common "ancestor", successive upper levels are in fact progressively under used. Thus the network can be extended in levels indefinitely without overloading.

For a multi-rooted tree such as this the choice of "parent" link on the upward journey is arbitrary and can be dynamically chosen to avoid congestion. The upward path is used to get to a common ancestor, and any common ancestor will do. Traversing these arbitrary upward links constitutes an inefficiency of 50% as half the links traversed do not switch the packet towards its destination. The round trip delay is therefore twice that necessary.

The Inmos Transputer is a fast single chip computer designed to interconnect with other transputers in a distributed multi-transputer architecture. The language in which it is programmed, called "Occam", is designed to support communications between concurrent processes distributed across interconnected Transputers. The design goals behind the Transputer are thus compatible with those of a switching system with distributed functionality. In particular the integration of communications (four 10 to 20 Mbit/sec. links), storage (4 Kbytes) and processing (10 MIPS) onto a single chip makes the transputer a suitable component for building a packet switching network. Thus it in effects combines a small, in the present case 2 x 2, co-ordinate switch and its associated memory and processing means.

For the hardware engineer the Transputer promises to simplify the design by reducing the amount of hardware required external to the Transputers themselves. Any two communicating Transputers can be directly connected via a two-wire (plus ground) communication link, yet Transputers do not need to be synchronous to communicate as they can operate reliably from independent 5 MHz clocks. The point-to-point (Transputer-to-Transputer) communication links operate serially at 10 or 20 Mbits/sec. and require no buffering over short distances. These features make large systems consisting of many Transputer switching elements feasible since neither data nor a synchronising clock needs to be bussed around the entire system.

The current version of the Transputer has four ports, each with an incoming path and an output path. Hence it is usable as a 2 x 2 co-ordinate switch.

For a packet switch application, the main limitation of the Transputer is the small number of other Transputers it can directly communicate with. Structures requiring connectivity of more than four would require each node to consist of more than one Transputer. However, it is readily possible to develop a switching element of larger connectivity, e.g. the 16 x 16 element mentioned briefly above.

The diagram of Fig. 3 corresponds to the network of Fig. 2; its first two stages consist of two sub-arrays each of which is a two-stage network formed by two stages each including two 2 x 2 matrix elements. The sub-arrays are then coupled to four more 2 x 2 elements.

In the network of Fig. 4 we have eight subarrays such as those mentioned above for Fig. 3 arranged in pairs. These are followed by a third stage formed by four sets each of four 2 x 2 arrays to which those sub-arrays are coupled. The fourth stage includes twos sets each of eight 2 x 2 arrays, while the fifth stage is sixteen 2 x 2 arrays. Ther inter-stage couplings follow the same principles as those of Figs. 2 and 3.

## Claims

1. An automatic telecommunication switching system, in which intelligence is handled in packet manner, in which the system includes a plural-stage switching network each stage of which includes a plurality of co-ordinate matrices each of which interconnects a plurality of inlets and outlets, in which each said matrix has its own memory and processing means, so that control of the system is at least partly distributed, in which each intelligence packet on arriving at a said matrix is routed into that matrix's memory means and its address information examined by the matrix's processing means to ascertain how the packet is to be routed, and in which in response to said examination the processing means at a matrix routes a said packet to an outlet of that matrix appropriate to the packets' address information, so that a packet is progressed through the switching network in a stage-by-stage manner under the control of the processing means of the appropriate matrices.

2. A system as claimed in claim 1, and in which the connections of subscriber's lines, trunks and facilities circuits to the network are each made via interface modules which, at least in the cases of the lines and trunks, include processing means.

3. A system as claimed in claim 1, and in which interprocessor communications between module interfaces and/or the processing means at the matrices is effected over the same physical path as that used for the intelligence.

4. An automatic telecommunication switching system in which intelligence is handled in packet manner, in which the system includes a plural-stage folded switching network with the terminals served by the system connected to one side of the network, in which each connection between two of said terminals is set up via two half-connections one of which extends into the network from said one side and the other of which comes out of the network to said one side, in which each stage of the switching network includes a number of co-ordinate matrices each including a number of semiconductor cross-points, each such matrix interconnecting a plurality of matrix inlets and matrix outlets, in which each said switching matrix has its own memory means and its own processing means so that control of the system is at least partly distributed, in which when an intelligence packet traversing the network between two of said terminals arrives at a said matrix that packet is routed into that matrix's memory means and its address information is examined by that matrix's processing means to ascertain how the packet is to be routed, in which in response to said examination the processing means at a said matrix routes a said packet to an outlet of that matrix appropriate to a part of the address information of that packet, so that a packet is progressed through the switching network in a stage-by-stage manner under the control of the processing means of the appropriate ones of said matrices, and in which all packets for the same connection are conveyed over the same route via the switching network.

5. A system as claimed in claim 8, in which for a connection to be set up the number of stages that connection extends into the network is variable, the shortest possible path being used.

3

# *Fig.1.*

1

X.25/X.75 DATA
MODULE

2

VOICE SUBSCRIBER
MODULE

4

CONFERENCE VIDEO
MODULE

5

MULTI-SERVICE PACKET
TRUNK MODULE

PACKET
SWITCHING
NETWORK

6

VALUE
ADDED
SERVICE
MODULE

7

VALUE
ADDED
SERVICE
MODULE

8

CENTRAL
RESOURCE
MODULE

# *Fig.2.*

TO TERMINAL
MODULES

TO SUCCEEDING
STAGES
(IF ANY)

STAGE 1        STAGE 2        STAGE 3

Fig.3.

Fig.4.